# EUROPÄISCHE PATENTSCHRIFT

(11) **EP 3 792 096 B1**
(45) Veröffentlichungstag und Bekanntmachung des Hinweises auf die Patenterteilung: **30.10.2024**
(21) Anmeldenummer: 19196427.9
(22) Anmeldetag: 10.09.2019
(51) Int. Cl.: B60L 53/10, H01M 8/04082, H01M 8/2475, B60L 53/57, B60L 53/54, B60L 53/31, B60L 53/14

(54) **LADEVORRICHTUNGSSTATION UND VERFAHREN ZUR ERZEUGUNG EINES LADESTROMS FÜR EIN ELEKTRISCHES KRAFTFAHRZEUG**
CHARGING DEVICE STATION AND METHOD FOR GENERATING A CHARGING CURRENT FOR AN ELECTRIC MOTOR VEHICLE
STATION DE CHARGE ET METHODE POUR LA GENERATION D'UN COURANT DE CHARGE POUR UN VÉHICULE AUTOMOBILE ÉLECTRIQUE

(43) Veröffentlichungstag der Anmeldung: 17.03.2021
(73) Patentinhaber: me energy GmbH, 15745 Wildau (DE)
(72) Erfinder: SOHL, Alexander, 12437 Berlin (DE); ADLER, Inès, 10783 Berlin (DE)
(74) Vertreter: Dantz, Dirk

(56) Entgegenhaltungen:
- CN-A- 107 204 476
- CN-A- 109 609 210
- US-B1- 7 619 319
- ANONYMOUS: "Startup entwickelt Methanol-Schnellladesäule für E-Autos - ecomento.de", 12 July 2019 (2019-07-12), https://ecomento.de/, pages 1 - 2, XP055927736, Retrieved from the Internet <URL:https://ecomento.de/2019/07/12/startup-entwickelt-methanol-schnellladestation-fuer-elektroautos/> [retrieved on 20220602]
- HONDA: "Honda EU22i Owner's manual", 16 June 2018 (2018-06-16), pages 1 - 60, XP093075820, Retrieved from the Internet <URL:https://cf.hondappsv.com/files/OM/OM000631HME/00X36-Z44-G010_EU22iT_HME_de.pdf> [retrieved on 20230823]
- WORTBEDEUTUNG.INFO WÖRTERBUCH 2023: "Ladesäulen (Deutsch)", 23 August 2023 (2023-08-23), pages 1 - 1, XP093075829, Retrieved from the Internet <URL:https://www.wortbedeutung.info/Ladesäulen/> [retrieved on 20230823]

## Beschreibung

Die Erfindung betrifft eine Ladesäule für die Aufladung von Elektrofahrzeugen, die eine Einhausung, eine erste Vorrichtung zur Energiekonversion, eine zweite Vorrichtung zur Energiekonversion, eine Steuereinheit und einen Tank für einen flüssigen Energieträger aufweist, wobei beide Einheiten zur Energiekonversion, der Tank, und die Steuereinheit in der Einhausung angeordnet sind. Die Erfindung betrifft weiterhin ein Verfahren zur Erzeugung eines Ladestroms für die Aufladung von Elektrofahrzeugen mit den Verfahrensschritten Zuführen eines flüssigen Energieträgers von einem in einer Einhausung einer Ladesäule angeordneten Tank zu einer ersten Vorrichtung zur Energiekonversion, wobei die erste Vorrichtung zur Energiekonversion ebenfalls in der Einhausung angeordnet ist, Konvertierung des flüssigen Energieträgers in eine kinetische oder eine elektrische Energie in der ersten Vorrichtung zur Energiekonversion, Konvertierung der kinetischen oder der elektrischen Energie in einen Strom in einer zweiten Vorrichtung zur Energiekonversion, wobei die zweite Vorrichtung zur Energiekonversion in der Einhausung angeordnet ist und Abgabe des Stroms an ein Elektrofahrzeug.

### Stand der Technik

Mit der Verbreitung von Elektrofahrzeugen, die mit einem Elektromotor betrieben werden, muss eine funktionierende Infrastruktur zum Laden der Elektrofahrzeuge zur Verfügung gestellt werden. Neben dem Laden an der Haussteckdose muss den Benutzern von Elektrofahrzeugen die Möglichkeit eingeräumt werden, auch im öffentlichen Bereich Energie zu beziehen. Bei den bisher verfügbaren Reichweiten von Elektrofahrzeugen ist es notwendig, dass auch außerhalb des häuslichen Umfeldes ein Laden der Fahrzeuge möglich ist. Daher müssen in öffentlichen Bereichen Ladestationen zur Verfügung gestellt werden, um eine stete Verfügbarkeit von Energie für Elektrofahrzeuge durch ein Versorgungsnetz zu gewährleisten.

Bekannt sind stationäre Systeme zur elektrischen Versorgung von stationären Ladesäulen, um die Traktionsbatterie eines Plug-In-Fahrzeuges - Hybrid- oder Elektrofahrzeug - wieder aufzuladen, wie z.B. in DE 10 2009 016 505 A1 beschrieben. Die Ladesäule selbst wird auf eine Stromschiene der Stromversorgung angeschlossen. Ein bestehendes Stromnetz weist dabei ein Anschlusselement zum Ausgeben elektrischer Energie an ein Elektrofahrzeug auf.

Eine derartige Ladevorrichtung weist den Nachteil auf, dass sie nicht flexibel aufstellbar bzw. abzubauen ist. Die Kosten für den Aufbau und insbesondere den Anschluss der Ladevorrichtung an das bestehende Stromnetz sind ebenfalls sehr hoch. Falls also die Ladevorrichtung nur temporär an dem derzeitigen Ort verbleiben soll, verursacht ihre Aufstellung und ihr Abbau unnötig hohe Kosten. Flexibler einsetzbar sind Ladevorrichtungen, die derart aufgebaut sind, dass sie transportabel sind.

Die Patentschrift "DE 10 2010 043 516 A1 - Vorrichtung zur Schnellladung eines elektrischen Energiespeichers eines Fahrzeugs" der Firma Power Innovation Stromversorgungstechnik GmbH offenbart eine Vorrichtung zum Austausch elektrischer Energie. Die Vorrichtung weist einen elektrischen Energiespeicher (Akku) auf, der über eine programmierbare Steuerung und einen AC/DC-Wandler den Energiespeicher des Fahrzeugs lädt. Der Energiespeicher der Vorrichtung selbst wird über verschiedene Gleichspannungsquellen wieder aufgeladen. Alle Komponenten (Energiespeicher, Steuerung, Wandler) sind in einer Einrichtung angeordnet, die Gleichspannungsquelle zur Aufladung des Energiespeichers extern und entfernt von der Einrichtung.

Diese Ladevorrichtung weist den Nachteil auf, dass sie so groß und schwer gestaltet ist, dass sie nur auf großen Flächen aufgebaut und betrieben werden kann, z.B. auf Parkplätzen von Einkaufszentren. Ihr Einsatz in z.B. Parkhäusern ist nicht möglich. Ebenfalls ist ein Anschluss an ein bereits bestehendes Stromnetz notwendig.

Die Gebrauchsmusterschrift "DE 20 2010 011 567 U1 - Mobile Stromtankstelle" der Firma Beton- und Energietechnik Heinrich Gräper GmbH & Co. KG offenbart eine transportable Stromtankstelle, die innerhalb eines transportablen Stationsgebäudes angeordnet ist. Das Gebäude weist mehrere Räume auf und besteht aus Beton. Im Gebäude sind sowohl Brennstoffzellenmodule, Speicherbehälter für den Brennstoff (Wasserstoff, Methan, Biogas) als auch ein Wechselrichter angeordnet. Außerdem weist das Gebäude eine Photovoltaikanlage zur Eigenversorgung auf.

Diese Ladevorrichtung ist ebenfalls sehr groß und schwer. Für ihren Transport wird mindestens ein Lastkraftwagen benötigt.

Die Patentschrift "DE 10 2017 207 023 B4 - Ladesystem und Verfahren zum Betreiben eines Ladesystems" der Firma AUDI AG offenbart ein Ladesystem, das eine transportierbare Ladestation aufweist. Die Ladestation weist einen Generator auf, der mittels eines synthetischen Kraftstoffs betrieben wird. Überschüssige Energie wird in einer Zwischenspeichereinrichtung (Akku), die in der Ladestation angeordnet ist, gespeichert. Der Kraftstoff selbst wird in einer externen Kraftstoffherstellungseinrichtung hergestellt. Dabei wird mittels regenerativer Energiequellen aus dem Kohlendioxid der Atmosphäre der Kraftstoff synthetisiert.

Die Patentschrift CN 109 609 210 A beschreibt eine Ladesystem für Elektrofahrzeuge, dass über einen Tank, einen Motor und einer Konversionseinheit zur Erzeugung elektrischer Energie verfügt.

Die Patentschrift CN 107 204 476 A beschreibt ein System zur Erzeugung von Wasserstoff in Kombination mit einer Ladesäule. Der erzeugte Wasserstoff wird verwendet, um die für die Ladestation benötigte elektrische Energie zu erzeugen.

Die Patentschrift US 7 619 319 B1 beschreibt eine mobile Ladestation zur elektrischen Betankung von mehreren Fahrzeugen, die in einem LKW-Anhänger über einen Generator mit entsprechendemTank verfügt.

Im Online-Artikel unter https://ecomento.de/2019/07/12/startup-entwickelt-methanolschnellladestation-fuer-elektroautos/ wird eine Schnellladestation mit einem Tank und einem Motor beschrieben, die 150kW leisten soll. Der Motor wird mit Methanol betrieben, der aus einem 15991-Tank gespeist wird.

Das Honda EU22i Owner Manual beschreibt einen kleinen Generator der geeignet ist auch Elektroautos zu laden. Der Generator verfügt über einen Motor mit einem Tank und eine entsprechende Konversionsvorrichtung. Weiterhin wird beschrieben, dass der Generator über zahlreiche Anschlussmöglichkeiten verfügt, unter anderem auch eine Anschlusssteckdose für ein Ladekabel zur Ladung eines Elektrofahrzeuges.

Diese Ladevorrichtung benötigt für ihren Betrieb synthetischen Kraftstoff, der derzeit nicht oder nur in geringen Mengen zur Verfügung steht und deshalb sehr teuer ist. Ein Betrieb der Ladevorrichtung ist daher ebenfalls sehr teuer, eine Versorgung mit dem benötigten synthetischen Kraftstoff nicht garantiert.

Es ist daher die Aufgabe der vorliegenden Erfindung, eine Ladevorrichtung für Kraftfahrzeuge zur Verfügung zu stellen, die derart kompakt und leicht gestaltet ist, dass sie nahezu überall aufgebaut, betrieben und bei Bedarf einfach und schnell wieder abgebaut werden kann.

Es ist ebenfalls die Aufgabe der vorliegenden Erfindung, eine Ladevorrichtung für Kraftfahrzeuge zur Verfügung zu stellen, die derart kompakt aufgebaut ist, dass sie in Herstellung, Installation und Betrieb kostengünstiger als bisher bekannte Ladevorrichtungen ist, und die autark arbeitet.

Die genannte Aufgabe wird mittels der Ladesäule gemäß Anspruch 1 gelöst. Weitere vorteilhafte Gestaltungen der Erfindung sind in den Unteransprüchen dargelegt.

Die erfindungsgemäße Ladesäule für die Aufladung von Elektrofahrzeugen weist eine erste Vorrichtung zur Energiekonversion sowie eine zweite Vorrichtung zur Energiekonversion auf. Zusätzlich weist die Ladesäule einen Tank für einen flüssigen Energieträger und eine Steuereinheit auf. Erfindungsgemäß sind beide Vorrichtungen zur Energiekonversion, der Tank und die Steuereinheit vorteilhafterweise in einer Einhausung verbaut.

Die Dimensionen der Ladesäule sind sehr kompakt und diese kann als ganzes Bauteil transportiert, aufgestellt, betrieben und wieder abgebaut werden. Insbesondere für den ländlichen Bereich bietet die erfindungsgemäße Ladesäule Vorteile gegenüber herkömmlichen Ladesäulen, die an ein bestehendes Stromnetz angeschlossen werden müssen: Die Kosten der Ladesäule und damit die Investitionen für Installation und Betrieb sind niedrig. Falls die Ladesäule an dem gewählten Standort nicht rentabel betrieben werden kann, ist sie wieder leicht abzubauen. Auch im Falle von baulichen Maßnahmen in unmittelbarer Umgebung der Ladesäule ist diese schnell zu entfernen und an einer anderen, geeigneteren Stelle wieder aufbaubar.

Die erste Vorrichtung zur Energiekonversion ist geeignet, einen flüssigen Energieträger in elektrische und/oder kinetische Energie zu konvertieren. Ein Verbrennungsmotor treibt die zweite Vorrichtung zur Energiekonversion durch Rotation an. Die durch den Verbrennungsmotor erzeugte kinetische Energie wird also durch die zweite Vorrichtung zur Energiekonversion in elektrische Energie umgewandelt. Bei Verwendung einer Brennstoffzelle als erste Vorrichtung erzeugt die Brennstoffzelle ohne Umwege elektrische Energie.

Die erste und die zweite Vorrichtung zur Energiekonversion sind eine Brennstoffzelle mit einem Stromrichter oder ein Verbrennungsmotor mit einem Generator. Der Verbrennungsmotor ist üblicherweise ein Kolben-Verbrennungsmotor, möglich sind aber auch andere Bauformen. Der Generator erzeugt durch Rotation elektrische Energie als Strom. Ein Stromrichter wandelt gegebenenfalls den vom Generator erzeugten Strom in einen Gleichstrom um und passt die Spannung des Gleichstromes an. Eine Brennstoffzelle erzeugt ohne Umwege elektrische Energie in Form eines Stroms, ein Stromrichter und/oder Stromwandler wandelt gegebenenfalls den erzeugten Strom in einen Gleichstrom mit einer Mindestspannung um.

Die Ladesäule weist einen elektrischen Energiespeicher auf. Der Energiespeicher versorgt die Steuereinheit und ggf. eine Beleuchtung mit Energie und startet die erste Vorrichtung zur Energiekonversion. Der elektrische Energiespeicher ist vorteilhafterweise wiederaufladbar ausgebildet.

Der elektrische Energiespeicher ist derartig angeschlossen, dass er eine Vorrichtung zur Beförderung des flüssigen Energieträgers zur ersten Vorrichtung zur Energiekonversion in Betrieb nehmen kann. Zum Betrieb der ersten Vorrichtung zur Energiekonversion ist die Förderung des Kraftstoffs aus dem Tank zur ersten Vorrichtung zur Energiekonversion notwendig. Üblicherweise geschieht dies durch eine handelsübliche Kraftstoffpumpe. Die Kraftstoffpumpe wird durch den elektrischen Energiespeicher mit Energie versorgt.

In einer Weiterbildung der Erfindung weist die Ladesäule ausschließlich einen oder mehrere elektrische Anschlüsse auf, die zur Aufladung von Elektrofahrzeugen geeignet sind. Über einen oder mehrere elektrische Anschlüsse (Ladekabel) wird die in der Ladesäule erzeugte elektrische Energie an ein Kraftfahrzeug abgegeben. Die Ladesäule weist keine weiteren elektrischen Anschlüsse auf, die außerhalb des Gehäuses liegen. Die Ladesäule benötigt daher keinen Anschluss an ein bestehendes Stromnetz. Die Kosten der Ladesäule und damit die Investitionen für Installation und Betrieb sind niedrig.

In einer weiteren Ausführung der Erfindung weist die Ladesäule ausschließlich Leitungen und/oder Anschlüsse auf, die dazu geeignet sind, elektrische Energie aus der Ladesäule herauszuleiten. Über einen oder mehrere elektrische Anschlüsse (Ladekabel) wird die in der Ladesäule erzeugte elektrische Energie an ein Kraftfahrzeug abgegeben. Die Ladesäule weist keine weiteren elektrischen Anschlüsse auf, die außerhalb des Gehäuses liegen. Die Ladesäule benötigt daher keinen Anschluss an ein bestehendes Stromnetz. Die Kosten der Ladesäule und damit die Investitionen für Installation und Betrieb sind niedrig.

Der Tank ist derart gestaltet, dass er mindestens 100l des flüssigen Energieträgers fasst, bevorzugt 200l und besonders bevorzugt 500l. Das Volumen des Tanks ist so dimensioniert, dass mindestens 10 Ladevorgänge (Tankinhalt 100l) möglich sind. Das Tankvolumen kann entsprechend den Anforderungen, die durch den Ort der Aufstellung der Ladesäule bestimmt sind, angepasst werden. So ist es z.B. sinnvoll, in Großstädten ein kleines Volumen des Tanks zu wählen, weil die Infrastruktur der Wiederbetankung gut ist, die Ladesäule also sehr schnell wieder betankt werden kann. In ländlichen Bereichen wird ein größeres Tankvolumen gewählt, um die Intervalle zwischen den einzelnen Tankvorgängen zu vergrößern.

Die Ladesäule ist weiterhin dafür geeignet eine Ladevorgang auszuführen wobei:
- ein Ladevorgang beginnt, wenn ein Benutzer der Ladekabel (10) in eine entsprechende Steckdose des zu ladenden Elektrofahrzeuges steckt,
- die Steuereinheit (5) dies erkennt, und in einem zweiten Verfahrensschritt (200) der flüssige Energieträger aus dem Tank (6) durch die Kraftstoffpumpe (11) der ersten Vorrichtung zur Energiekonversion (7) zugeführt wird, und diese mittels eines Anlassers, wenn die erste Vorrichtung zur Energiekonversion (3) ein Verbrennungsmotor ist, gestartet wird, und Anlasser und Kraftstoffpumpe (11) dabei durch den Energiespeicher (9) mit Energie versorgt werden.
- in einem dritten Verfahrensschritt (300) die erste Vorrichtung zur Energiekonversion (3) betrieben wird und
- in einem vierten Verfahrensschritt (400) elektrische Energie in Form von Gleichstrom durch die zweite Vorrichtung zur Energiekonversion (4) daraus erzeugt wird
- in einem fünften Verfahrensschritt (500) über das Ladekabel (10) dieser Gleichstrom an das Kraftfahrzeug abgegeben wird,
- der Ladevorgang beendet wird, wenn der Benutzer das Ladekabel (10) vom Kraftfahrzeug löst bzw. wenn ein Energiespeicher des Kraftfahrzeugs ausreichend geladen ist,
- nach Beendigung des Ladevorgangs die erste Vorrichtung zur Energiekonversion (3) gestoppt wird, und kein flüssiger Energieträger mehr zu der ersten Vorrichtung zur Energiekonversion (3) gefördert wird,
- die Ladesäule (1) in einen Standby-Modus bis zum Beginn des nächsten Ladevorgangs gefahren wird.

In einer weiteren Gestaltung der Erfindung ist der flüssige Energieträger Methanol, Ethanol oder Wasserstoff. Beide Kraftstoffarten können aus Biomasse umweltverträglich heraestellt werden, sind weltweit als Kraftstoffe seit Langem etabliert und stehen somit preiswert zur Verfügung, Ihr Transport und ihre Lagerung sowie ihr Betrieb sind vergleichbar mit herkömmlichem Benzin und damit unproblematisch.

In der Erfindung ist die Ladesäule geeignet, ohne *Zufuhr von Energie von außerhalb der Ladesäule Strom zu erzeugen. Die Ladesäule ist durch das Implementieren aller seiner einzelnen Komponenten sehr kompakt aufgebaut und benötigt keinen Anschluss an ein bestehendes Stromnetz. Die Ladesäule kann als* ganzes *Bauteil transportiert, aufgestellt, betrieben und wieder abgebaut werden. Die Kosten der Ladesäule und damit die Investitionen für Installation und Betrieb sind niedrig. Falls die Ladesäule an dem gewählten Standort nicht rentabel betrieben werden kann, ist sie wieder leicht abzubauen. Auch im Falle von baulichen Maßnahmen in unmittelbarer Umgebung der Ladesäule ist diese schnell zu entfernen und an einer anderen, geeigneteren Stelle wieder aufbaubar.*

In einer weiteren Gestaltung der Erfindung hat der Tank ein Volumen zur Aufnahme einer Menge eines flüssigen Energieträgers mit einer Energie von mindestens 125 kWh, bevorzugt 440 kWh und besonders bevorzugt 2000 kWh. Das Volumen des Tanks ist so dimensioniert, dass mindestens 10 Ladevorgänge (Tankinhalt 125 kWh) möglich sind. Das Tankvolumen kann entsprechend den Anforderungen, die durch den Ort der Aufstellung der Ladesäule bestimmt sind, angepasst werden. So ist es z.B. sinnvoll, in Großstädten ein kleines Volumen des Tanks zu wählen, weil die Infrastruktur der Wiederbetankung gut ist, die Ladesäule also sehr schnell wieder betankt werden kann. In ländlichen Bereichen wird ein größeres Tankvolumen gewählt, um die Intervalle zwischen den einzelnen Tankvorgängen zu vergrößern.

Die genannte Aufgabe wird ebenfalls mittels des erfindungsgemäßen Verfahrens zur Erzeugung eines Ladestroms für die Aufladung von Elektrofahrzeugen gemäß Anspruch 4 gelöst.

Das erfindungsgemäße Verfahren zur Erzeugung eines Ladestroms für die Aufladung von Elektrofahrzeugen weist fünf Verfahrensschritte auf: Im ersten Verfahrensschritt wird ein flüssiger Energieträger in einen in einer Einhausung angeordneten Tank zugeführt. Die Befüllung des Tanks kann z.B. mittels eines Tankfahrzeugs erfolgen.

Im zweiten Verfahrensschritt wird ein flüssiger Energieträger von einem Tank in die erste Vorrichtung zur Energiekonversion zugeführt. Tank und erste Vorrichtung zur Energiekonversion sind dabei in einer Einhausung angeordnet. Der Ladevorgang beginnt, wenn ein Benutzer den elektrischen Anschluss (Ladekabel) in die entsprechende Steckdose des zu ladenden Kraftfahrzeuges steckt. Dann wird der Kraftstoff aus dem Tank mittels z.B. einer Kraftstoffpumpe der ersten Vorrichtung zur Energiekonversion zugeführt und diese in Betrieb genommen.

Im dritten Verfahrensschritt wird der flüssige Energieträger in kinetische oder elektrische Energie in der ersten Vorrichtung zur Energiekonversion konvertiert. Je nach Ausführung der ersten Vorrichtung zur Energiekonversion (Verbrennungsmotor oder Brennstoffzelle) wird die im Kraftstoff gespeicherte chemische Energie im Verbrennungsmotor in kinetische Energie konvertiert, eine Brennstoffzelle konvertiert die im Kraftstoff gespeicherte chemische Energie in einen Gleichstrom.

Im vierten Verfahrensschritt wird die elektrische oder kinetische Energie, die mittels der ersten Vorrichtung zur Energiekonversion erzeugt wurde, in der zweiten Vorrichtung zur Energiekonversion in einen Gleichstrom konvertiert. Bei Verwendung eines Verbrennungsmotors als erste Vorrichtung zur Energiekonversion treibt der Verbrennungsmotor die zweite Vorrichtung zur Energiekonversion, z.B. einen Generator, durch Rotation an. Die durch den Verbrennungsmotor erzeugt kinetische Energie wird also durch den Generator in elektrische Energie umgewandelt, in einen Strom. Bei Verwendung einer Brennstoffzelle wird der erzeugte Gleichstrom mittels eines Stromrichters in einen Gleichstrom mit einer Mindestspannung umgewandelt. Die zweite Vorrichtung zur Energiekonversion kann demnach als Stromrichter und/oder Stromwandler ausgestaltet sein.

Im fünften Verfahrensschritt wird der Strom, der in der zweiten Vorrichtung zur Energiekonversion erzeugt wurde, an ein Elektrofahrzeug abgegeben. Die Dimensionen der Ladesäule sind sehr kompakt und diese kann als ganzes Bauteil transportiert, aufgestellt, betrieben und wieder abgebaut werden. Insbesondere für den ländlichen Bereich bietet die erfindungsgemäße Ladesäule Vorteile gegenüber herkömmlichen Ladesäulen, die an ein bestehendes Stromnetz angeschlossen werden müssen: Die Kosten der Ladesäule und damit die Investitionen für Installation und Betrieb sind niedrig. Falls die Ladesäule an dem gewählten Standort nicht rentabel betrieben werden kann, ist sie wieder leicht abzubauen. Auch im Falle von baulichen Maßnahmen in unmittelbarer Umgebung der Ladesäule ist diese schnell zu entfernen und an einer anderen, geeigneteren Stelle wieder aufbaubar.

### Bei dem erfindungsgemäßen Verfahren :

- beginnt ein Ladevorgang, wenn ein Benutzer der Ladekabel (10) in eine entsprechende Steckdose des zu ladenden Elektrofahrzeuges steckt,
- erkennt die Steuereinheit (5) dies, und der flüssige Energieträger aus dem Tank (6) durch die Kraftstoffpumpe (11) der ersten Vorrichtung zur Energiekonversion (7) zugeführt wird, und diese mittels eines Anlassers, wenn die erste Vorrichtung zur Energiekonversion (3) ein Verbrennungsmotor ist, gestartet wird, und Anlasser und Kraftstoffpumpe (11) dabei durch den Energiespeicher (9) mit Energie versorgt werden.
- wird über das Ladekabel (10) dieser Gleichstrom an das Kraftfahrzeug abgegeben,
- wird der Ladevorgang beendet, wenn der Benutzer das Ladekabel (10) vom Kraftfahrzeug löst bzw. wenn ein Energiespeicher des Kraftfahrzeugs ausreichend geladen ist,
- wird nach Beendigung des Ladevorgangs die erste Vorrichtung zur Energiekonversion (3) gestoppt, und kein flüssiger Energieträger mehr zu der ersten Vorrichtung zur Energiekonversion (3) gefördert wird, und
- wird die Ladesäule (1) in einen Standby-Modus bis zum Beginn des nächsten Ladevorgangs gefahren,
wobei die Ladesäule
- eine Einhausung (2),
- eine erste Vorrichtung zur Energiekonversion (3),
- eine zweite Vorrichtung zur Energiekonversion (4),
- eine Steuereinheit (5),
- eine Kraftstoffpumpe (11),
- einen elektrischer Energiespeicher (9),
   wobei:
   die erste Vorrichtung zur Energiekonversion (3) ein Verbrennungsmotor und die zweite Vorrichtung zur Energiekonversion (4) ein Generator ist,
   wobei nach dem Generator ein Stromrichter den vom Generator erzeugten Strom in Gleichstrom umwandelt,
   oder
   die erste Vorrichtung zur Energiekonversion (3) eine Brennstoffzelle und
   die zweite Vorrichtung zur Energiekonversion (4) ein Gleichstromrichter ist,
- zumindest ein Ladekabel (10) und
- einen Tank (6) für einen flüssigen Energieträger aufweist,

wobei die erste Vorrichtung zur Energiekonversion (3), die zweite Vorrichtung zur Energiekonversion (4), der Tank (6), die Kraftstoffpumpe und die Steuereinheit in der Einhausung (2) angeordnet sind,
wobei die erste Vorrichtung zur Energiekonversion (3) geeignet ist, den flüssigen Energieträger in elektrische-oder kinetische Energie zu konvertieren, wobei die zweite Vorrichtung zur Energiekonversion (4) geeignet ist, Gleichstrom aus dem Ausgang der ersten Vorrichtung zur Energiekonversion (3) zur Verfügung zu stellen,
wobei der Tank (6) mindestens 100l flüssigen Energieträger fasst,
wobei der elektrische Energiespeicher (9) zur Versorgung der Steuereinheit (5) und zum Starten der ersten Vorrichtung zur Energiekonversion (3) vorgesehen ist,
wobei die Ladesäule (1) geeignet ist, ohne Energiezufuhr von außen Strom zu erzeugen, wobei zwischen zwei Vorgängen zur Zuführung des flüssigen Energieträgers in den in der Einhausung (2) der Ladesäule (1) angeordneten Tank (6) mehrere Ladevorgänge möglich sind, und wobei die Steuereinheit (5) eine SMS oder Email, an den Betreiber der Ladesäule (1) senden kann, wenn der Tankinhalt ein bestimmtes vorher festgelegtes Volumen unterschritten hat.

In der Erfindung erfolgt ein Transport elektrischer Energie ausschließlich von der Ladesäule nach außerhalb der Ladesäule. Über einen oder mehrere elektrische Anschlüsse (Ladekabel) wird die in der Ladesäule erzeugte elektrische Energie an ein Kraftfahrzeug abgegeben. Die Ladesäule weist keine weiteren elektrischen Anschlüsse auf, die außerhalb des Gehäuses liegen. Die Ladesäule benötigt daher keinen Anschluss an ein bestehendes Stromnetz. Die Kosten der Ladesäule und damit die Investitionen für Installation und Betrieb sind niedrig.

In einem weiteren Aspekt der Erfindung endet die Erzeugung der elektrischen Energie in der Ladesäule mit dem Ende eines Ladevorgangs. Der Ladevorgang endet, wenn der Benutzer das Ladekabel vom zu ladenden Kraftfahrzeug löst bzw. wenn der Energiespeicher des Kraftfahrzeugs ausreichend (z.B. 80% der Kapazität des Energiespeichers oder mehr) geladen ist. Nach Beendigung des Ladevorgangs wird die erste Vorrichtung zur Energiekonversion gestoppt und kein Kraftstoff mehr zur ersten Vorrichtung zur Energiekonversion gefördert. Die Ladesäule fährt in einen Standby-Modus bis zum Beginn des nächsten Ladevorgangs.

In einer weiteren Gestaltung der Erfindung erfolgt das Zuführen eines flüssigen Energieträgers von einem in einer Einhausung einer Ladesäule angeordneten Tank zu einer ersten Vorrichtung zur Energiekonversion nicht zeitgleich mit der Zuführung eines flüssigen Energieträgers in einen in einer Einhausung einer Ladesäule angeordneten Tank. Das Befüllen des Tanks erfolgt einerseits aus Sicherheitsgründen zu einem anderen Zeitpunkt als der Ladevorgang, andererseits um einen Ladevorgang nicht zu unterbrechen. Die Servicequalität für einen Benutzer wird dadurch erhöht.

In einer weiteren Gestaltung der Erfindung wird dem in einer Einhausung einer Ladesäule angeordneten Tank ein Volumen eines flüssigen Energieträgers mit einer Energie von mindestens 125 kWh, bevorzugt 440 kWh und besonders bevorzugt 2000 kWh zugeführt. Das Volumen des Tanks ist so dimensioniert, dass mindestens 10 Ladevorgänge (Tankinhalt 125 kWh) möglich sind. Das Tankvolumen kann entsprechend den Anforderungen, die durch den Ort der Aufstellung der Ladesäule bestimmt sind, angepasst werden. So ist es z.B. sinnvoll, in Großstädten ein kleines Volumen des Tanks zu wählen, weil die Infrastruktur der Wiederbetankung gut ist, die Ladesäule also sehr schnell wieder betankt werden kann. In ländlichen Bereichen wird ein größeres Tankvolumen gewählt, um die Intervalle zwischen den einzelnen Tankvorgängen zu vergrößern.

Ausführungsbeispiele der erfindungsgemäßen Ladesäule für die Aufladung von Elektrofahrzeugen und des erfindungsgemäßen Verfahrens zur Erzeugung eines Ladestroms für die Aufladung von Elektrofahrzeugen sind in den Zeichnungen schematisch vereinfacht dargestellt und werden in der nachfolgenden Beschreibung näher erläutert. Es zeigen:
- Fig. 1:: Ein Ausführungsbeispiel der erfindungsgemäßen Ladesäule mit Verbrennungsmotor
- Fig. 2:: Ein Ausführungsbeispiel der erfindungsgemäßen Ladesäule mit Brennstoffzelle
- Fig. 3:: Ein Ausführungsbeispiel des erfindungsgemäßen Verfahrens für die Aufladung von Elektrofahrzeugen

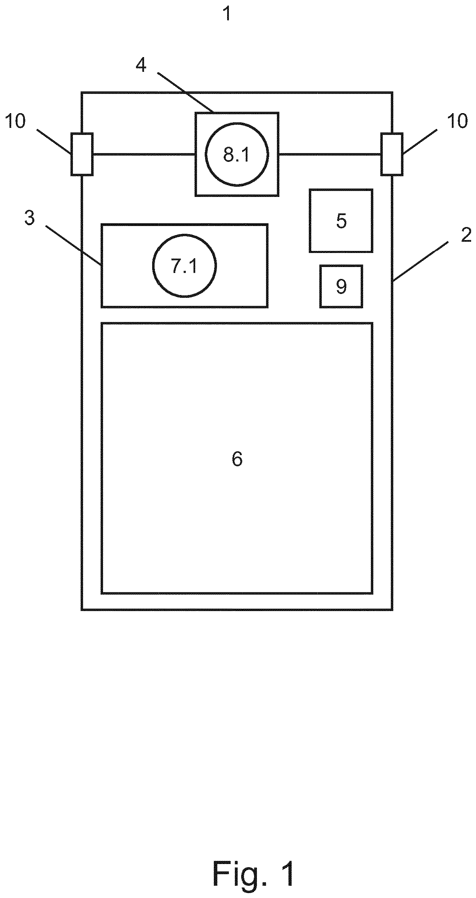

Ein Ausführungsbeispiel der erfindungsgemäßen Ladesäule 1 zeigt Fig. 1. Die Ladesäule 1 weist in diesem Ausführungsbeispiel einen Verbrennungsmotor 7 auf, der innerhalb der ersten Vorrichtung zur Energiekonversion 3 verbaut ist. Der Verbrennungsmotor 7 ist üblicherweise ein Kolben-Verbrennungsmotor, möglich sind aber auch andere Bauformen wie z.B. Wankelmotor oder Turbine. Betrieben wird der Verbrennungsmotor 7 vorteilhafterweise vorzugsweise mit Methanol oder Ethanol oder einem Gemisch von Methanol und Ethanol. Beide Kraftstoffarten können aus Biomasse umweltverträglich hergestellt werden, sind weltweit als Kraftstoffe seit Langem etabliert und stehen somit preiswert zur Verfügung. Ihr Transport und ihre Lagerung sowie ihr Betrieb in Verbrennungsmotoren sind vergleichbar mit herkömmlichem Benzin (für Kraftfahrzeuge) und damit unproblematisch. Die Lagerung des Kraftstoffs in der erfindungsgemäßen Ladesäule 1 erfolgt in einem Tank 6 mit einem Fassungsvermögen von 100l. Der Verbrennungsmotor 7 treibt die zweite Vorrichtung zur Energiekonversion 3 durch Rotation an, in diesem Ausführungsbeispiel einen Generator 8. Die durch den Verbrennungsmotor 7 erzeugt kinetische Energie wird also durch den Generator 8 in elektrische Energie umgewandelt, in einen Strom.

Weiterhin ist in der Ladesäule 1 ein elektrischer Energiespeicher (wiederaufladbarer Akku) 9 sowie eine Vorrichtung zur Beförderung des flüssigen Energieträgers 11 verbaut. Der Energiespeicher 9 versorgt die Steuereinheit 5, mittels der die Ladesäule 1 den Beginn bzw. die Beendigung eines Ladevorgangs erkennt und initiiert. Außerdem kann ein Benutzer mittels der Steuereinheit 5 den Ladevorgang bezahlen. Dabei sind mehrere Bezahlsysteme möglich, z.B. über verschiedene Kreditkarten oder über ein mobiles Endgerät, z.B. ein Smartphone.

Der elektrische Energiespeicher 9 startet über einen Anlasser und die Kraftstoffpumpe 11, die den Kraftstoff in den Verbrennungsmotor 7 fördert, ebenfalls den Verbrennungsmotor 7 bei Beginn eines Ladevorgangs. Der elektrische Energiespeicher 9 wird ggf. durch die durch den Generator 8 erzeugte elektrische Energie wieder aufgeladen. Über einen oder mehrere elektrische Anschlüsse 10 (Ladekabel) wird die in der Ladesäule 1 erzeugte elektrische Energie an ein Kraftfahrzeug abgegeben.

Die erste und die zweite Vorrichtung zur Energiekonversion 3,4 mit Verbrennungsmotor 7 und Generator 8, Tank 6, Energiespeicher 9, der Kraftstoffpumpe 11, Steuereinheit 5 sowie die elektrischen Anschlüsse 10 sind alle vorteilhafterweise in einer Einhausung 2 verbaut. Die Ladesäule 1 ist wie dargelegt völlig autark zu betreiben, d.h. sie benötigt keinen elektrischen Anschluss an ein bestehendes Stromnetz. Die benötigte elektrische Energie für ihren Betrieb wird durch den wiederaufladbaren Energiespeicher 9 geliefert. Die Dimensionen der Ladesäule 1 sind ebenfalls sehr kompakt, den meisten Raum nimmt üblicherweise der Kraftstofftank 6 ein. Durch eine geeignete Wahl der Größe des Tanks 6 können die Abmessungen der Ladesäule 1 klein gehalten werden, nötig ist dann aber ggf. eine häufige Befüllung des Tanks 6 mit Kraftstoff. Die Steuereinheit 5 ist dazu vorteilhafterweise über WLAN oder ähnliche Kommunikationseinrichtungen mit dem Betreiber der Ladesäule 1 verbunden und gibt eine entsprechende Meldung ab, wenn der Tank 6 wieder befüllt werden muss.

Das erfindungsgemäße Verfahren zur Erzeugung eines Ladestroms für die Aufladung von Elektrofahrzeugen weist fünf Verfahrensschritte auf: Im ersten Verfahrensschritt 100 wird ein flüssiger Energieträger, in diesem Ausführungsbeispiel aus Biomasse gewonnenes Methanol, in einen in einer Einhausung angeordneten Tank 6 zugeführt. Die Befüllung des Tanks 6 erfolgt mittels eines Tankfahrzeugs. Dem Tank 6 werden mindestens 100l (entsprechend 200 kWh) Methanol zugeführt, bevorzugt 200l (entsprechend 400 kWh) und besonders bevorzugt 500l (entsprechend 1000 kWh). Das Volumen des Tanks ist so dimensioniert, dass mindestens 10 Ladevorgänge (Tankinhalt 100l) möglich sind. Das Tankvolumen kann entsprechend den Anforderungen, die durch den Ort der Aufstellung der Ladesäule bestimmt sind, angepasst werden. So ist es z.B. sinnvoll, in Großstädten ein kleines Volumen des Tanks zu wählen, weil die Infrastruktur der Wiederbetankung gut ist, die Ladesäule also sehr schnell wieder betankt werden kann. In ländlichen Bereichen wird ein größeres Tankvolumen gewählt, um die Intervalle zwischen den einzelnen Tankvorgängen zu vergrößern. Bevorzugte Tankvolumina sind hier 2000l, 10.000l oder auch 20.000t.

Der Ladevorgang beginnt, wenn ein Benutzer den elektrischen Anschluss (Ladekabel) 10 in die entsprechende Steckdose des zu ladenden Kraftfahrzeuges steckt. Die Steuereinheit 5 erkennt dies, und im zweiten Verfahrensschritt 200 wird der Kraftstoff aus dem Tank 6 durch die Kraftstoffpumpe 11 dem Verbrennungsmotor 7 zugeführt und dieser mittels eines Anlassers gestartet. Anlasser und Kraftstoffpumpe 11 werden dabei durch den Energiespeicher 9 mit Energie versorgt. Im dritten Verfahrensschritt 300 treibt der Verbrennungsmotor 7 den Generator 8 an, die im Kraftstoff gespeicherte chemische Energie wird also in kinetische Energie konvertiert und im vierten Verfahrensschritt 400 in elektrische Energie. Diese elektrische Energie wird im fünften Verfahrensschritt 500 über das Ladekabel 10 an das Kraftfahrzeug abgegeben. Der Ladevorgang endet, wenn der Benutzer das Ladekabel 10 vom Kraftfahrzeug löst bzw. wenn der Energiespeicher des Kraftfahrzeugs ausreichend (z.B. 80% der Kapazität des Energiespeichers oder mehr) geladen ist. Nach Beendigung des Ladevorgangs wird der Verbrennungsmotor 7 gestoppt und kein Kraftstoff mehr zum Verbrennungsmotor 7 gefördert. Die Ladesäule 1 fährt in einen Standby-Modus bis zum Beginn des nächsten Ladevorgangs.

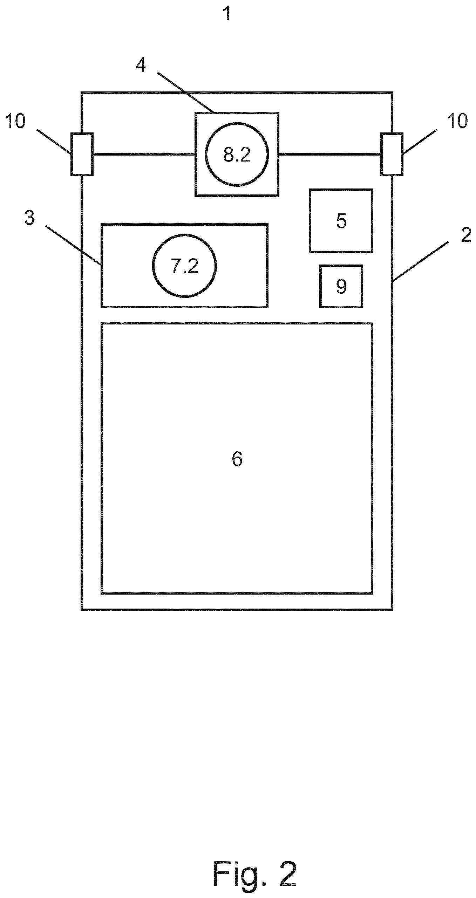

Fig. 2 zeigt ein Ausführungsbeispiel der erfindungsgemäßen Ladesäule, die mittels einer Brennstoffzelle 7 Strom zum Laden eines Kraftfahrzeugs erzeugt. Die Ladesäule 1 weist eine Brennstoffzelle 7 auf, die innerhalb der ersten Vorrichtung zur Energiekonversion 3 verbaut ist. Die Brennstoffzelle 7 ist üblicherweise eine Direct Methanol Fuel Cell (DMFC), die mittels Methanol betrieben wird. Möglich sind aber auch andere Ausführungen der Brennstoffzelle 7, die z.B. mittels Ethanol, Biogas oder Wasserstoff betrieben werden. Alle diese Kraftstoffarten können aus Biomasse bzw. aus Erdgas umweltverträglich hergestellt werden, sind weltweit als Kraftstoffe seit Langem etabliert und stehen somit preiswert zur Verfügung.

Insbesondere Transport und Lagerung der flüssigen Betriebsstoffe (Methanol, Ethanol) sowie ihr Betrieb in Brennstoffzellen sind vergleichbar mit herkömmlichem Benzin (für Kraftfahrzeuge) und damit unproblematisch. Die Lagerung des Kraftstoffs in der erfindungsgemäßen Ladesäule 1 erfolgt in einem Tank 6. Die Brennstoffzelle 7 besteht üblicherweise aus mehreren Stapeln (Stacks) von einzelnen Brennstoffzellen und ist somit der gewünschten Leistung der Ladesäule 1 anpassbar.

Weiterhin ist in der Ladesäule 1 ein elektrischer Energiespeicher (wiederaufladbarer Akku) 9 sowie eine Vorrichtung zur Beförderung des flüssigen Energieträgers 11 verbaut. Der Energiespeicher 9 versorgt die Steuereinheit 5, mittels der die Ladesäule 1 den Beginn bzw. die Beendigung eines Ladevorgangs erkennt und initiiert. Außerdem kann ein Benutzer mittels der Steuereinheit 5 den Ladevorgang bezahlen. Dabei sind verschiedene Bezahlsysteme möglich, z.B. über verschiedene Kreditkarten oder über ein mobiles Endgerät, z.B. ein Smartphone.

Der elektrische Energiespeicher 9 startet über die Kraftstoffpumpe 11, die den Kraftstoff in die Brennstoffzelle 7 fördert, bei Beginn eines Ladevorgangs. Mittels des Wechselrichters 8 wird der in der Brennstoffzelle 7 erzeugte Gleichstrom in Gleichstrom mit einer Mindestspannung umgewandelt. Der elektrische Energiespeicher 9 wird ggf. wieder durch die durch den Generator 8 erzeugte elektrische Energie wieder aufgeladen. Über einen oder mehrere elektrische Anschlüsse 10 (Ladekabel) wird die in der Ladesäule 1 erzeugte elektrische Energie an ein Kraftfahrzeug abgegeben.

Die erste und die zweite Vorrichtung zur Energiekonversion 3,4 mit Brennstoffzelle 7 und Wechselrichter 8, Tank 6, Energiespeicher 9, der Kraftstoffpumpe 11, Steuereinheit 5 sowie die elektrischen Anschlüsse 10 sind alle vorteilhafterweise in einer Einhausung 2 verbaut. Die Ladesäule 1 ist wie dargelegt völlig autark zu betreiben, d.h. sie benötigt keinen elektrischen Anschluss an ein bestehendes Stromnetz. Die benötigte elektrische Energie für ihren Betrieb wird durch den wiederaufladbaren Energiespeicher 9 geliefert. Die Dimensionen der Ladesäule 1 sind ebenfalls sehr kompakt, den meisten Raum nimmt üblicherweise der Kraftstofftank 6 ein. Durch eine geeignete Wahl der Größe des Tanks 6 können die Abmessungen der Ladesäule 1 klein gehalten werden.

Das erfindungsgemäße Verfahren zur Erzeugung eines Ladestroms für die Aufladung von Elektrofahrzeugen weist fünf Verfahrensschritte auf: Im ersten Verfahrensschritt 100 wird ein flüssiger Energieträgerin einen in einer Einhausung angeordneten Tank 6 zugeführt. Die Befüllung des Tanks 6 erfolgt mittels eines Tankfahrzeugs. Der Ladevorgang beginnt, wenn ein Benutzer den elektrischen Anschluss (Ladekabel) 10 in die entsprechende Steckdose des zu ladenden Kraftfahrzeuges steckt. Die Steuereinheit 5 erkennt dies, und im zweiten Verfahrensschritt 200 wird der Kraftstoff aus dem Tank 6 durch die Kraftstoffpumpe 11 der Brennstoffzelle 7 zugeführt. Die Kraftstoffpumpe 11 wird dabei durch den Energiespeicher 9 mit Energie versorgt. Im dritten Verfahrensschritt 300 erzeugt die Brennstoffzelle 7 einen Gleichstrom, im vierten Verfahrensschritt 400 wird der Gleichstrom durch den Stromrichter 8 in einen Gleichstrom mit einer Mindestspannung (z.B. 230V oder 920V) umgewandelt. Dieser Gleichstrom wird im fünften Verfahrensschritt 500 über das Ladekabel 10 an das Kraftfahrzeug abgegeben. Der Ladevorgang endet, wenn der Benutzer das Ladekabel 10 vom Kraftfahrzeug löst bzw. wenn der Energiespeicher des Kraftfahrzeugs ausreichend (z.B. 90% der Kapazität des Energiespeichers oder mehr) geladen ist. Nach Beendigung des Ladevorgangs wird der Betrieb der Brennstoffzelle 7 gestoppt und kein Kraftstoff mehr zur Brennstoffzelle 7 gefördert. Die Ladesäule 1 fährt in einen Standby-Modus bis zum Beginn des nächsten Ladevorgangs.

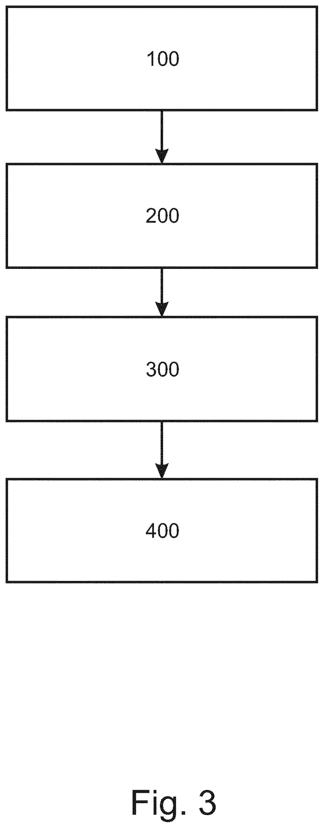

Fig. 3 zeigt das erfindungsgemäße Verfahren zur Erzeugung eines Ladestroms für die Aufladung von Elektrofahrzeugen. Das erfindungsgemäße Verfahren mittels der erfindungsgemäßen Ladesäule 1 weist fünf Verfahrensschritte auf: Im ersten Verfahrensschritt 100 wird ein flüssiger Energieträger in einen in einer Einhausung angeordneten Tank 6 zugeführt. Der Ladevorgang beginnt, wenn ein Benutzer den elektrischen Anschluss (Ladekabel) 10 in die entsprechende Steckdose des zu ladenden Kraftfahrzeuges steckt. Die Steuereinheit 5 erkennt dies, und im zweiten Verfahrensschritt 200 wird der Kraftstoff aus dem Tank 6 durch die Kraftstoffpumpe 11 der Brennstoffzelle 7 bzw. dem Verbrennungsmotor 7 zugeführt und dieser mittels eines Anlassers gestartet. Die Kraftstoffpumpe 11 wird dabei durch den Energiespeicher 9 mit Energie versorgt. Im dritten Verfahrensschritt 300 erzeugt die Brennstoffzelle 7 einen Gleichstrom bzw. treibt der Verbrennungsmotor 7 den Generator 8 an. Im vierten Verfahrensschritt 400 wird der Gleichstrom, der von der Brennstoffzelle 7 erzeugt wird, durch den Stromrichter 8 in Gleichstrom mit einer Mindestspannung umgewandelt. Im Falle des Vorhandenseins eines Verbrennungsmotors 7 treibt der Verbrennungsmotor 7 den Generator 8 an, die im Kraftstoff gespeicherte chemische Energie wird also in kinetische Energie konvertiert und im vierten Verfahrensschritt 400 in elektrische Energie.

Dieser Strom wird im fünften Verfahrensschritt 500 über das Ladekabel 10 an das Kraftfahrzeug abgegeben. Der Ladevorgang endet, wenn der Benutzer das Ladekabel 10 vom Kraftfahrzeug löst bzw. wenn der Energiespeicher des Kraftfahrzeugs ausreichend (z.B. 75% der Kapazität des Energiespeichers oder mehr) geladen ist. Nach Beendigung des Ladevorgangs wird der Verbrennungsmotor 7 gestoppt und kein Kraftstoff mehr zum Verbrennungsmotor 7 gefördert. Die Ladesäule 1 fährt in einen Standby-Modus bis zum Beginn des nächsten Ladevorgangs.

### BEZUGSZEICHENLISTE

- 1: Ladesäule
- 2: Einhausung
- 3: 1. Vorrichtung zur Energiekonversion
- 4: 2. Vorrichtung zur Energiekonversion
- 5: Steuereinheit
- 6: Tank
- 7: Brennstoffzelle/Verbrennungsmotor
- 8: Stromrichter/Generator
- 9: Energiespeicher
- 10: Elektrischer Anschluss
- 11: Vorrichtung zur Beförderung des flüssigen Energieträgers
- 100: Zuführen eines flüssigen Energieträgers in den Tank
- 200: Transport von einem flüssigen Energieträger vom Tank zur ersten Vorrichtung zur Energiekonversion
- 300: Konvertierung des flüssigen Energieträgers in eine kinetische oder elektrische Energie
- 400: Konvertierung der kinetischen oder elektrischen Energie in einen Gleichstrom
- 500: Laden eines Elektrofahrzeugs

## Patentansprüche

1. Ladesäule für die Aufladung von Elektrofahrzeugen, die aufweist:
• eine Einhausung (2)
• eine erste Vorrichtung zur Energiekonversion (3)
• eine zweite Vorrichtung zur Energiekonversion (4)
• eine Steuereinheit (5)
• eine Kraftstoffpumpe (11)
• einen elektrischer Energiespeicher (9)
wobei:
- die erste Vorrichtung zur Energiekonversion (3) ein Verbrennungsmotor und die zweite Vorrichtung zur Energiekonversion (4) ein Generator ist, wobei nach dem Generator ein Stromrichter den vom Generator erzeugten Strom in Gleichstrom umwandelt
oder
• - die erste Vorrichtung zur Energiekonversion (3) eine Brennstoffzelle und die zweite Vorrichtung zur Energiekonversion (4) ein Gleichstromrichter ist
• zumindest ein Ladekabel (10) und
• einen Tank (6) für einen flüssigen Energieträger,
wobei die erste Vorrichtung zur Energiekonversion (3), die zweite Vorrichtung zur Energiekonversion (4), der Tank (6), die Kraftstoffpumpe und die Steuereinheit in der Einhausung (2) angeordnet sind,
wobei die erste Vorrichtung zur Energiekonversion (3) geeignet ist, den flüssigen Energieträger in elektrische-oder kinetische Energie zu konvertieren, wobei die zweite Vorrichtung zur Energiekonversion (4) geeignet ist, Gleichstrom aus dem Ausgang der ersten Vorrichtung zur Energiekonversion (3) zur Verfügung zu stellen,
wobei der Tank (6) mindestens 100l flüssigen Energieträger fasst,
wobei der elektrischer Energiespeicher (9) zur Versorgung der Steuereinheit (5) und zum Starten der ersten Vorrichtung zur Energiekonversion (3) vorgesehen ist,
wobei die Ladesäule (1) geeignet ist, ohne Energiezufuhr von außen Strom zu erzeugen, wobei zwischen zwei Vorgängen zur Zuführung des flüssigen Energieträgers in den in der Einhausung (2) der Ladesäule (1) angeordneten Tank (6) mehrere Ladevorgänge möglich sind, und wobei die Steuereinheit (5) konfiguriert ist, eine SMS oder Email, an den Betreiber der Ladesäule (1) zu senden, wenn der Tankinhalt ein bestimmtes vorher festgelegtes Volumen unterschritten hat,
wobei:
• ein Ladevorgang beginnt, wenn ein Benutzer der Ladekabel (10) in eine entsprechende Steckdose des zu ladenden Elektrofahrzeuges steckt,
• die Steuereinheit (5) dies erkennt, und in einem zweiten Verfahrensschritt (200) der flüssige Energieträger aus dem Tank (6) durch die Kraftstoffpumpe (11) der ersten Vorrichtung zur Energiekonversion (7) zugeführt wird, und diese mittels eines Anlassers, wenn die erste Vorrichtung zur Energiekonversion (3) ein Verbrennungsmotor ist, gestartet wird, und Anlasser und Kraftstoffpumpe (11) dabei durch den Energiespeicher (9) mit Energie versorgt werden.
• in einem dritten Verfahrensschritt (300) die erste Vorrichtung zur Energiekonversion (3) betrieben wird und
• in einem vierten Verfahrensschritt (400) elektrische Energie in Form von Gleichstrom durch die zweite Vorrichtung zur Energiekonversion (4) daraus erzeugt wird
• in einem fünften Verfahrensschritt (500) über das Ladekabel (10) dieser Gleichstrom an das Kraftfahrzeug abgegeben wird,
• der Ladevorgang beendet wird, wenn der Benutzer das Ladekabel (10) vom Kraftfahrzeug löst bzw. wenn ein Energiespeicher des Kraftfahrzeugs ausreichend geladen ist,
• nach Beendigung des Ladevorgangs die erste Vorrichtung zur Energiekonversion (3) gestoppt wird, und kein flüssiger Energieträger mehr zu der ersten Vorrichtung zur Energiekonversion (3) gefördert wird,
• die Ladesäule (1) in einen Standby-Modus bis zum Beginn des nächsten Ladevorgangs gefahren wird.

2. Ladesäule (1) für die Aufladung von Elektrofahrzeugen nach Anspruch 1,
**dadurch gekennzeichnet, dass**
der flüssige Energieträger Methanol, Ethanol, Biogas oder Wasserstoff ist.

3. Ladesäule (1) für die Aufladung von Elektrofahrzeugen nach einem oder mehreren der vorangegangenen Ansprüche,
**dadurch gekennzeichnet, dass**
der Tank (6) ein Volumen zur Aufnahme einer Menge eines flüssigen Energieträgers mit einer Energie von mindestens 125 kWh.

4. Verfahren zur Erzeugung eines Ladestroms für die Aufladung von Elektrofahrzeugen, das folgende Verfahrensschritte aufweist:
• Zuführen (100) eines flüssigen Energieträgers in einen in einer Einhausung (2) der Ladesäule (1) angeordneten Tank (6),
• Zuführen (200) eines flüssigen Energieträgers von einem in der Einhausung (2) einer Ladesäule (1) angeordneten Tank (6) zu einer ersten Vorrichtung zur Energiekonversion (3), wobei die erste Vorrichtung zur Energiekonversion (3) ebenfalls in der Einhausung (2) angeordnet ist,
• Konvertierung (300) des flüssigen Energieträgers in eine kinetische oder eine elektrische Energie durch die erste Vorrichtung zur Energiekonversion (3),
• Konvertierung (300) der kinetischen oder elektrischen Energie in einen Gleichstrom durch eine zweite Vorrichtung zur Energiekonversion (4),
• Abgabe (500) der elektrischen Energie in Form eines Stroms an ein Elektrofahrzeug
wobei:
• ein Ladevorgang beginnt, wenn ein Benutzer der Ladekabel (10) in eine entsprechende Steckdose des zu ladenden Elektrofahrzeuges steckt,
• die Steuereinheit (5) dies erkennt, und der flüssige Energieträger aus dem Tank (6) durch die Kraftstoffpumpe (11) der ersten Vorrichtung zur Energiekonversion (7) zugeführt wird, und diese mittels eines Anlassers, wenn die erste Vorrichtung zur Energiekonversion (3) ein Verbrennungsmotor ist, gestartet wird, und Anlasser und Kraftstoffpumpe (11) dabei durch den Energiespeicher (9) mit Energie versorgt werden.
• über das Ladekabel (10) der Gleichstrom an das Kraftfahrzeug abgegeben wird,
• der Ladevorgang beendet wird, wenn der Benutzer das Ladekabel (10) vom Kraftfahrzeug löst bzw. wenn ein Energiespeicher des Kraftfahrzeugs ausreichend geladen ist,
• nach Beendigung des Ladevorgangs die erste Vorrichtung zur Energiekonversion (3) gestoppt wird, und kein flüssiger Energieträger mehr zu der ersten Vorrichtung zur Energiekonversion (3) gefördert wird,
• die Ladesäule (1) in einen Standby-Modus bis zum Beginn des nächsten Ladevorgangs gefahren wird,
wobei die Ladesäule
• eine Einhausung (2),
• eine erste Vorrichtung zur Energiekonversion (3),
• eine zweite Vorrichtung zur Energiekonversion (4),
• eine Steuereinheit (5),
• eine Kraftstoffpumpe (11),
• einen elektrischer Energiespeicher (9),
wobei:
die erste Vorrichtung zur Energiekonversion (3) ein Verbrennungsmotor und die zweite Vorrichtung zur Energiekonversion (4) ein Generator ist, wobei nach dem Generator ein Stromrichter den vom Generator erzeugten Strom in Gleichstrom umwandelt,
oder
die erste Vorrichtung zur Energiekonversion (3) eine Brennstoffzelle und die zweite Vorrichtung zur Energiekonversion (4) ein Gleichstromrichter ist,
• zumindest ein Ladekabel (10) und
• einen Tank (6) für einen flüssigen Energieträger aufweist,
wobei die erste Vorrichtung zur Energiekonversion (3), die zweite Vorrichtung zur Energiekonversion (4), der Tank (6), die Kraftstoffpumpe und die Steuereinheit in der Einhausung (2) angeordnet sind,
wobei die erste Vorrichtung zur Energiekonversion (3) geeignet ist, den flüssigen Energieträger in elektrische-oder kinetische Energie zu konvertieren, wobei die zweite Vorrichtung zur Energiekonversion (4) geeignet ist, Gleichstrom aus dem Ausgang der ersten Vorrichtung zur Energiekonversion (3) zur Verfügung zu stellen,
wobei der Tank (6) mindestens 100l flüssigen Energieträger fasst,
wobei der elektrischer Energiespeicher (9) zur Versorgung der Steuereinheit (5) und zum Starten der ersten Vorrichtung zur Energiekonversion (3) vorgesehen ist,
wobei die Ladesäule (1) geeignet ist, ohne Energiezufuhr von außen Strom zu erzeugen, wobei zwischen zwei Vorgängen zur Zuführung des flüssigen Energieträgers in den in der Einhausung (2) der Ladesäule (1) angeordneten Tank (6) mehrere Ladevorgänge möglich sind, und wobei die Steuereinheit (5) eine SMS oder Email, an den Betreiber der Ladesäule (1) senden kann, wenn der Tankinhalt ein bestimmtes vorher festgelegtes Volumen unterschritten hat.

5. Verfahren zur Erzeugung eines Ladestroms für die Aufladung von Elektrofahrzeugen nach Anspruch 4,
**dadurch gekennzeichnet, dass**
ein Transport elektrischer Energie ausschließlich von der Ladesäule (1) nach außen erfolgt.

6. Verfahren zur Erzeugung eines Ladestroms für die Aufladung von Elektrofahrzeugen nach einem oder mehreren der Ansprüche 4 bis 5,
**dadurch gekennzeichnet, dass**
das Zuführen (200) eines flüssigen Energieträgers von einem in einer Einhausung (2) einer Ladesäule (1) angeordneten Tank (6) zu einer ersten Vorrichtung zur Energiekonversion (3) nicht zeitgleich mit der Zuführung (100) eines flüssigen Energieträgers in einem in einer Einhausung (2) einer Ladesäule (1) angeordneten Tank erfolgt.

7. Verfahren zur Erzeugung eines Ladestroms für die Aufladung von Elektrofahrzeugen nach einem oder mehreren der Ansprüche **4** bis 6,
**dadurch gekennzeichnet, dass**
zwischen zwei Vorgängen zur Zuführung (100) eines flüssigen Energieträgers in einen in einer Einhausung (2) einer Ladesäule (1) angeordneten Tank (6) bei Ladevorgängen von Elektrofahrzeugen eine Energie in Höhe von mindestens 125 kWh, bevorzugt mindestens 440 kWh und besonders bevorzugt mindestens 2000 kWh abgegeben wird.

## Claims

1. Charging column for charging electric motor vehicles, comprising
- a housing (2),
- a first device for energy conversion (3),
- a second device for energy conversion (4),
- a control unit (5),
- a fuel pump (11),
- an electrical energy storage device (9),
wherein:
- the first device for energy conversion (3) is an internal combustion engine and the second device for energy conversion (4) is a generator, wherein downstream of the generator a power converter converts the current generated by the generator into direct current
or
- the first device for energy conversion (3) is a fuel cell and the second device for energy conversion (4) is a direct current converter
- at least one charging cable (10) and
- a tank (6) for a liquid energy carrier,
wherein the first device for energy conversion (3), the second device for energy conversion (4), the tank (6), the fuel pump and the control unit are arranged in the housing (2),
wherein the first device for energy conversion (3) is adapted to convert the liquid energy carrier into electrical or kinetic energy, wherein the second device for energy conversion (4) is adapted to provide direct current from the output of the first device for energy conversion (3),
wherein the tank (6) is capable of holding a minimum of 100 litres of liquid energy carrier,
wherein the electrical energy storage device (9) is provided for supplying the control unit (5) and for starting the first device for energy conversion (3),
wherein the charging column (1) is suitable for generating electricity without an external energy supply, wherein several charging processes are possible between two processes for supplying the liquid energy carrier into the tank (6) arranged in the housing (2) of the charging column (1), and wherein the control unit (5) is configured to send an SMS or email to the operator of the charging column (1) when the tank content has fallen below a certain predetermined volume,
wherein:
- a charging process begins when a user plugs the charging cable (10) into a corresponding socket of the electric motor vehicle to be charged,
- the control unit (5) recognises this, and in a second method step (200) the liquid energy carrier is fed from the tank (6) to the first device for energy conversion (7) by the fuel pump (11), and this is started by means of a starter motor if the first device for energy conversion (3) is an internal combustion engine, and the starter motor and fuel pump (11) are supplied with energy by the electrical energy storage device (9).
- in a third method step (300), the first device for energy conversion (3) is operated, and
- in a fourth method step (400), electrical energy in the form of direct current is generated therefrom by the second device for energy conversion (4)
- in a fifth method step (500), this direct current is supplied to the electric motor vehicle via the charging cable (10),
- the charging method is terminated when the user disconnects the charging cable (10) from the electric motor vehicle or when an electrical energy storage device of the electric motor vehicle is sufficiently charged,
- the first device for energy conversion (3) is stopped at the end of the charging process and no more liquid energy carrier is conveyed to the first device for energy conversion (3),
- the charging column (1) is moved into a standby mode until the start of the next charging process.

2. Charging column (1) for charging electric motor vehicles according to claim 1,
**characterised in that**
the liquid energy carrier is methanol, ethanol, biogas or hydrogen.

3. Charging column (1) for charging electric motor vehicles according to one or more of the preceding claims,
**characterised in that**
the tank (6) has a volume for holding a quantity of a liquid energy carrier with an energy of at least 125 kWh.

4. Method for generating a charging current for charging electric motor vehicles, comprising the following method steps:
- Supply (100) of a liquid energy carrier to a tank (6) arranged in a housing (2) of the charging column (1),
- Supply (200) of a liquid energy carrier from a tank (6) arranged in the housing (2) of a charging column (1) to a first device for energy conversion (3), the first device for energy conversion (3) also being arranged in the housing (2),
- Conversion (300) of the liquid energy carrier into kinetic or electrical energy by the first device for energy conversion (3),
- Conversion (300) of the kinetic or electrical energy into a direct current by a second device for energy conversion (4),
- output (500) of the electrical energy in the form of a current to an electric motor vehicle,
wherein:
- a charging process begins when a user plugs the charging cable (10) into a corresponding socket of the electric motor vehicle to be charged,
- the control unit (5) recognises this, and the liquid energy carrier is fed from the tank (6) to the first device for energy conversion (7) by the fuel pump (11), and this is started by means of a starter motor if the first device for energy conversion (3) is an internal combustion engine, and the starter motor and fuel pump (11) are supplied with energy by the electrical energy storage device (9),
- this direct current is supplied to the electric motor vehicle via the charging cable (10),
- the charging method is terminated when the user disconnects the charging cable (10) from the electric motor vehicle or when an electrical energy storage device of the electric motor vehicle is sufficiently charged,
- the first device for energy conversion (3) is stopped at the end of the charging process and no more liquid energy carrier is conveyed to the first device for energy conversion (3),
- the charging column (1) is moved into a standby mode until the start of the next charging process,
wherein the charging column comprises:
- a housing (2),
- a first device for energy conversion (3),
- a second device for energy conversion (4),
- a control unit (5),
- a fuel pump (11),
- an electrical energy storage device (9),
wherein:
- the first device for energy conversion (3) is an internal combustion engine and the second device for energy conversion (4) is a generator, wherein downstream of the generator a power converter converts the current generated by the generator into direct current
or
- the first device for energy conversion (3) is a fuel cell and the second device for energy conversion (4) is a direct current converter
- at least one charging cable (10) and
- comprising a tank (6) for a liquid energy carrier,
wherein the first device for energy conversion (3), the second device for energy conversion (4), the tank (6), the fuel pump and the control unit are arranged in the housing (2),
wherein the first device for energy conversion (3) is adapted to convert the liquid energy carrier into electrical or kinetic energy, wherein the second device for energy conversion (4) is adapted to provide direct current from the output of the first device for energy conversion (3),
wherein the tank (6) is capable of holding a minimum of 100 litres of liquid energy carrier,
wherein the electrical energy storage device (9) is provided for supplying the control unit (5) and for starting the first device for energy conversion (3),
wherein the charging column (1) is suitable for generating electricity without an external energy supply, wherein several charging processes are possible between two processes for supplying the liquid energy carrier into the tank (6) arranged in the housing (2) of the charging column (1), and wherein the control unit (5) is configured to send an SMS or email to the operator of the charging column (1) when the tank content has fallen below a certain predetermined volume.

5. Method for generating a charging current for charging electric motor vehicles according to claim 4,
**characterised in that**
electrical energy transport is exclusively from the charging column (1) to the outside.

6. Method for generating a charging current for charging electric motor vehicles according to claims 4 or 5,
**characterised in that**
the supply (200) of a liquid energy carrier from a tank (6) arranged in a housing (2) of a charging column (1) to a first device for energy conversion (3) does not take place at the same time as the supply (100) of a liquid energy carrier in a tank arranged in a housing (2) of a charging column (1).

7. Method for generating a charging current for charging electric motor vehicles according to one or more of claims 4 to 6,
**characterised in that**
between two processes for supplying (100) a liquid energy carrier into a tank (6) arranged in a housing (2) of a charging column (1) during charging processes of electric motor vehicles, an energy of at least 125 kWh, preferably at least 440 kWh and particularly preferably at least 2000 kWh is released.

## Revendications

1. Borne de recharge pour recharger des véhicules électriques, qui comprend :
• un boîtier (2)
• un premier dispositif de conversion d'énergie (3)
• un second dispositif de conversion d'énergie (4)
• une unité de commande (5)
• une pompe à carburant (11)
• un accumulateur d'énergie électrique (9)
dans laquelle :
- le premier dispositif de conversion d'énergie (3) est un moteur à combustion interne et le second dispositif de conversion d'énergie (4) est un générateur, dans laquelle un convertisseur de puissance convertit, en aval du générateur, l'électricité générée par le générateur en courant continu
ou
• - le premier dispositif de conversion d'énergie (3) est une pile à combustible et le second dispositif de conversion d'énergie (4) est un convertisseur CC
• au moins un câble de chargement (10) et
• un réservoir (6) pour un vecteur d'énergie liquide,
dans laquelle le premier dispositif de conversion d'énergie (3), le second dispositif de conversion d'énergie (4), le réservoir (6), la pompe à carburant et l'unité de commande sont disposés dans le boîtier (2),
dans laquelle le premier dispositif de conversion d'énergie (3) est adapté pour convertir le vecteur d'énergie liquide en énergie électrique ou cinétique, dans laquelle le second dispositif de conversion d'énergie (4) est adapté pour mettre à disposition du courant continu à partir de la sortie du premier dispositif de conversion d'énergie (3),
dans laquelle le réservoir (6) contient au moins 100 litres de vecteur d'énergie liquide,
dans laquelle l'accumulateur d'énergie électrique (9) est prévu pour alimenter l'unité de commande (5) et pour démarrer le premier dispositif de conversion d'énergie (3),
dans laquelle la borne de recharge (1) est adaptée à la production d'électricité sans apport d'énergie externe, dans laquelle plusieurs processus de charge sont possibles entre deux processus d'acheminement du vecteur d'énergie liquide dans le réservoir (6) disposé dans le boîtier (2) de la borne de recharge (1), et dans laquelle l'unité de commande (5) est configurée pour envoyer un SMS ou un e-mail à l'opérateur de la borne de recharge (1) lorsque le contenu du réservoir est tombé en dessous d'un certain volume prédéterminé,
dans laquelle :
• un processus de charge commence lorsqu'un utilisateur branche le câble de charge (10) dans une prise correspondante du véhicule électrique à charger,
• l'unité de commande (5) le reconnaît et, lors d'une deuxième étape de procédé (200), le vecteur d'énergie liquide provenant du réservoir (6) est acheminé au premier dispositif de conversion d'énergie (7) par la pompe à carburant (11), et celle-ci est démarrée au moyen d'un démarreur si le premier dispositif de conversion d'énergie (3) est un moteur à combustion interne, et, ce faisant, le démarreur et la pompe à carburant (11) sont alimentés en énergie par l'accumulateur d'énergie (9),
• lors d'une troisième étape de procédé (300), le premier dispositif de conversion d'énergie (3) est mis en service et
• lors d'une quatrième étape de procédé (400), de l'énergie électrique sous forme de courant continu est générée à partir de celle-ci par le second dispositif de conversion d'énergie (4) .
• lors d'une cinquième étape de procédé (500), ce courant continu est délivré au véhicule automobile via le câble de charge (10),
• le processus de charge est terminé lorsque l'utilisateur débranche le câble de charge (10) du véhicule automobile ou lorsqu'un accumulateur d'énergie dans le véhicule automobile est suffisamment chargé,
• une fois le processus de charge terminé, le premier dispositif de conversion d'énergie (3) est arrêté et aucun vecteur d'énergie liquide n'est plus transporté vers le premier dispositif de conversion d'énergie (3),
• la borne de recharge (1) passe en mode veille jusqu'au début du processus de charge suivant.

2. Borne de recharge (1) pour recharger des véhicules électriques selon la revendication 1,
**caractérisée en ce que**
le vecteur d'énergie liquide est le méthanol, l'éthanol, le biogaz ou l'hydrogène.

3. Borne de recharge (1) pour recharger des véhicules électriques selon une ou plusieurs des revendications précédentes,
**caractérisée en ce que**
le réservoir (6) a un volume suffisant pour recevoir une quantité de vecteur d'énergie liquide avec une énergie d'au moins 125 kWh.

4. Procédé de génération d'un courant de charge pour recharger des véhicules électriques, comprenant les étapes de procédé suivantes :
• acheminement (100) d'un vecteur d'énergie liquide dans un réservoir (6) disposé dans un boîtier (2) de la borne de recharge (1),
• acheminement (200) d'un vecteur d'énergie liquide à partir d'un réservoir (6) disposé dans le boîtier (2) d'une borne de recharge (1) vers un premier dispositif de conversion d'énergie (3), dans lequel le premier dispositif de conversion d'énergie (3) est également disposé dans le boîtier (2),
• conversion (300) du vecteur d'énergie liquide en énergie cinétique ou électrique par le premier dispositif de conversion d'énergie (3),
• conversion (300) de l'énergie cinétique ou électrique en courant continu par un second dispositif de conversion d'énergie (4),
• fourniture (500) d'énergie électrique sous forme de courant à un véhicule électrique
dans lequel :
• un processus de charge commence lorsqu'un utilisateur branche le câble de charge (10) dans une prise correspondante du véhicule électrique à charger,
• l'unité de commande (5) le reconnaît et le vecteur d'énergie liquide provenant du réservoir (6) est acheminé au premier dispositif de conversion d'énergie (7) par la pompe à carburant (11), et celle-ci est démarrée au moyen d'un démarreur si le premier dispositif de conversion d'énergie (3) est un moteur à combustion interne, et, ce faisant, le démarreur et la pompe à carburant (11) sont alimentés en énergie par l'accumulateur d'énergie (9),
• le courant continu est délivré au véhicule automobile via le câble de charge (10),
• le processus de charge est terminé lorsque l'utilisateur débranche le câble de charge (10) du véhicule automobile ou lorsqu'un accumulateur d'énergie dans le véhicule automobile est suffisamment chargé,
• une fois le processus de charge terminé, le premier dispositif de conversion d'énergie (3) est arrêté et aucun vecteur d'énergie liquide n'est plus transporté vers le premier dispositif de conversion d'énergie (3),
• la borne de recharge (1) passe en mode veille jusqu'au début du processus de charge suivant,
dans lequel la borne de recharge comprend
• un boîtier (2),
• un premier dispositif de conversion d'énergie (3),
• un second dispositif de conversion d'énergie (4),
• une unité de commande (5),
• une pompe à carburant (11),
• un accumulateur d'énergie électrique (9),
dans lequel :
le premier dispositif de conversion d'énergie (3) est un moteur à combustion interne et le second dispositif de conversion d'énergie (4) est un générateur, dans lequel un convertisseur de puissance convertit, en aval du générateur, l'électricité générée par le générateur en courant continu,
ou
le premier dispositif de conversion d'énergie (3) est une pile à combustible et le second dispositif de conversion d'énergie (4) est un convertisseur CC,
• au moins un câble de chargement (10) et
• un réservoir (6) pour un vecteur d'énergie liquide,
dans lequel le premier dispositif de conversion d'énergie (3), le second dispositif de conversion d'énergie (4), le réservoir (6), la pompe à carburant et l'unité de commande sont disposés dans le boîtier (2),
dans lequel le premier dispositif de conversion d'énergie (3) est adapté pour convertir le vecteur d'énergie liquide en énergie électrique ou cinétique, dans lequel le second dispositif de conversion d'énergie (4) est adapté pour mettre à disposition du courant continu à partir de la sortie du premier dispositif de conversion d'énergie (3),
dans lequel le réservoir (6) contient au moins 100 litres de vecteur d'énergie liquide,
dans lequel l'accumulateur d'énergie électrique (9) est prévu pour alimenter l'unité de commande (5) et pour démarrer le premier dispositif de conversion d'énergie (3),
dans lequel la borne de recharge (1) est adaptée à la production d'électricité sans apport d'énergie externe, dans lequel plusieurs processus de charge sont possibles entre deux processus d'acheminement du vecteur d'énergie liquide dans le réservoir (6) disposé dans le boîtier (2) de la borne de recharge (1), et dans lequel l'unité de commande (5) peut envoyer un SMS ou un e-mail à l'opérateur de la borne de recharge (1) lorsque le contenu du réservoir est tombé en dessous d'un certain volume prédéterminé.

5. Procédé de génération d'un courant de charge pour recharger des véhicules électriques selon la revendication 4,
**caractérisé en ce que**
l'énergie électrique est transportée exclusivement de la borne de recharge (1) vers l'extérieur.

6. Procédé de génération d'un courant de charge pour recharger des véhicules électriques selon une ou plusieurs des revendications 4 à 5,
**caractérisé en ce que**
l'acheminement (200) d'un vecteur d'énergie liquide depuis un réservoir (6) disposé dans un boîtier (2) d'une borne de recharge (1) vers un premier dispositif de conversion d'énergie (3) n'est pas concomitant avec l'acheminement (100) d'un vecteur d'énergie liquide dans un réservoir disposé dans un boîtier (2) d'une borne de recharge (1).

7. Procédé de génération d'un courant de charge pour recharger des véhicules électriques selon une ou plusieurs des revendications 4 à 6,
**caractérisé en ce que**
entre deux processus d'acheminement (100) d'un vecteur d'énergie liquide dans un réservoir (6) disposé dans un boîtier (2) d'une borne de recharge (1) lors de processus de recharge de véhicules électriques, une énergie d'au moins 125 kWh, de préférence d'au moins 440 kWh et de manière particulièrement préférée d'au moins 2 000 kWh, est délivrée.
